**Europäisches Patentamt**

**European Patent Office**

**Office européen des brevets**

(19)

(11) Veröffentlichungsnummer: **0 045 965**
**B1**

(12) # EUROPÄISCHE PATENTSCHRIFT

(45) Veröffentlichungstag der Patentschrift:
15.02.84

(51) Int. Cl.³: **H 04 N 1/38**

(21) Anmeldenummer: **81106237.1**

(22) Anmeldetag: **10.08.81**

(54) **Verfahren und Anordnung zum Darstellen von Grauwerten bei einer Faksimile-Übertragung.**

(30) Priorität: **13.08.80 DE 3030648**

(43) Veröffentlichungstag der Anmeldung:
**17.02.82 Patentblatt 82/7**

(45) Bekanntmachung des Hinweises auf die Patenterteilung:
**15.02.84 Patentblatt 84/7**

(84) Benannte Vertragsstaaten:
**FR GB**

(56) Entgegenhaltungen:
**DE - A - 2 017 960**
**DE - A - 2 363 460**
**DE - B - 2 748 289**

(73) Patentinhaber: **SIEMENS AKTIENGESELLSCHAFT,
Berlin und München Wittelsbacherplatz 2,
D-8000 München 2 (DE)**

(72) Erfinder: **Heinzl, Joachim, Prof. Dr.,
Dreisesselbergstrasse 16, D-8000 München 90 (DE)**
Erfinder: **van Borstel, Klaus-Peter, Dipl.-Ing.,
Richard-Wagner-Strasse 21 a, D-8023 Pullach (DE)**

Verfahren und Anordnung zum Darstellen von Grauwerten bei einer Faksimile-Übertragung

Die Erfindung bezieht sich auf ein Verfahren zum Darstellen von Grauwerten bei einer Faksimile-Übertragung, bei dem eine mit grafischen Mustern versehene Vorlage auf mehreren parallelen Linien abgetastet wird und den Grauwerten der grafischen Muster zugeordnete Grauwertsignale erzeugt werden und bei dem die Grauwerte durch einzelne Punkte konstanter Grösse dargestellt werden, deren Anzahl pro Flächeneinheit dem jeweiligen Grauwert zugeordnet ist. Weiterhin bezieht sich die Erfindung auf eine Schaltungsanordnung zur Durchführung des Verfahrens.

Es ist bereits bekannt, mit einem Mosaikdruckkopf versehene Schreibstationen nicht nur für die Darstellung von alphanumerischen Zeichen, sondern auch als Empfangsgeräte für eine Faksimile-Übertragung zu verwenden. Die Zeichen und die grafischen Muster werden bei diesen Schreibstationen durch vom Mosaikdruckkopf erzeugte Punkte gleicher Grösse dargestellt. Da eine Erzeugung von Punkten mit unterschiedlicher Grösse bei Mosaikdruckköpfen nicht ohne weiteres möglich ist, müssen Grauwerte als Pseudo-Halbtöne aus Punkten gleicher Grösse dargestellt werden. Bei diesen Pseudo-Halbtönen ist jeweils einem Grauwert eine bestimmte Anzahl von Punkten pro Flächeneinheit zugeordnet.

Für die Erzeugung der Pseudo-Halbtöne wäre es denkbar, eine Addierstufe vorzusehen, die die Momentanwerte von bei einer Abtastung einer Vorlage längs einer Linie erzeugten Grauwertsignalen summiert. Wenn die Summe einen vorgegebenen Schwellenwert überschreitet, wird ein Druckbefehl an den Mosaikdruckkopf abgegeben. Gleichzeitig wird die Summe um den Schwellenwert vermindert. Falls eine gleichmässig graue Fläche auf einer Mehrzahl von Linien abgetastet wird, besteht bei gleichen Ausgangswerten jedoch die Gefahr, dass die allen Linien zugeordneten Summen gleichzeitig den Schwellenwert erreichen und dass damit die gleichmässig graue Fläche durch zu den Linien senkrechte Striche dargestellt wird. Diese senkrechten Striche können zur Ausbildung von Moirémustern führen und ausserdem kann bei der Darstellung nicht unterschieden werden, ob eine gleichmässig graue Fläche oder eine mit entsprechenden senkrechten Strichen versehene Vorlage abgetastet wurde.

Aus der DE-A-23 63 460 ist ein Verfahren bekannt, bei dem die Momentanwerte der Grauwertsignale einer vorgegebenen Anzahl von Linien addiert und gespeichert werden. Dieses Verfahren hat den Nachteil, dass bei der Wiedergabe einer abgetasteten, gleichmässigen grauen Fläche ein Moirémuster entstehen kann.

Der Erfindung liegt daher die Aufgabe zugrunde, ein Verfahren zum Darstellen von Grauwerten anzugeben, bei dem gleichmässig graue Flächen durch entsprechende Pseudo-Halbtöne eindeutig dargestellt werden.

Erfindungsgemäss wird die Aufgabe bei dem Verfahren der eingangs genannten Art gelöst durch die zeitliche Aufeinanderfolge folgender Verfahrensschritte:

a) in bekannter Weise werden die Momentanwerte der Grauwertsignale einer vorgegebenen Anzahl von Linien addiert und gespeichert,
b) falls die den Linien zugeordneten gespeicherten Summen gleich sind, werden zu den jeweiligen Summen unterschiedliche konstante Werte hinzuaddiert,
c) wenn eine Summe einen vorgegebenen Schwellenwert überschreitet, wird in der entsprechenden Linie ein Punkt dargestellt,
d) nach dem Drucken eines Punkts wird die Summe um einen einem Schwarzwert entsprechenden Wert vermindert.

Das Verfahren gemäss der vorliegenden Erfindung hat den Vorteil, dass die Ausbildung von Moirémustern bei der Wiedergabe von gleichmässig grauen Flächen vermieden wird.

Das Verfahren erfordert einen geringen Aufwand, wenn die Grauwerte durch die Grauwertsignale digitalisiert dargestellt werden und wenn die Addition der Grauwertsignale, der konstanten Werte und die Subtraktion des einem Schwarzwert entsprechenden Werts digital erfolgen.

Zweckmässigerweise wird der jeweilige konstante Wert addiert, wenn die entsprechende Summe den halben dem Schwarzwert zugeordneten Wert erreicht.

Durch die Addition der konstanten Werte wird ein Grauwertzuwachs in vorteilhafter Weise vermieden, wenn die Summe der zu den einzelnen Summen addierten Werte bei einer vorgegebenen Anzahl von Linien möglichst klein ist. Dies wird dadurch erreicht, dass zu den den verschiedenen Linien zugeordneten Summen positive und negative Werte addiert werden. Ein Grauwertzuwachs wird dann vollständig vermieden, wenn die Summe der konstanten Werte gleich Null ist.

Zweckmässigerweise ist der Schwellenwert gleich dem dem Schwarzwert zugeordneten Wert und gleich einem vorgegebenen ganzzahligen Vielfachen des Schwarzwerts für einen Teilschritt, wobei unter einem Teilschritt die kleinste Differenz zwischen zwei möglichen Punktlagen längs einer Linie verstanden wird. Ein Schritt ist dagegen der kürzeste Abstand zwischen zwei von demselben Schreibelement erzeugten Punkten.

Zur Vermeidung von streuenden Punkten durch Aufsummieren von Randgrauwerten an scharfen Konturen ist es vorteilhaft, wenn die Summen beim Auftreten eines einem Schwarzwert zugeordneten Werts den Wert Null annehmen.

Eine vorteilhafte Anordnung zur Durchführung des Verfahrens ist dadurch gekennzeichnet, dass eine mit einer Auswertestufe verbundene Addierstufe vorgesehen ist, die die Grauwertsignale summiert, die konstanten Werte addiert, wenn die Auswertestufe die Gleichheit der den Linien zugeordneten Summen erkennt und die den dem Schwarzwert zugeordneten Wert subtrahiert, wenn die jeweilige Summe den Schwellenwert erreicht.

Das Verfahren kann sowohl auf der Sendeseite als auch auf der Empfangsseite angewendet werden, wenn die Addierstufe einem die grafischen Muster abtastenden Abtaster und/oder einem empfangene Signale demodulierenden Demodulator nachgeschaltet ist.

Im folgenden wird eine Durchführung des Verfahrens anhand von Zeichnungen näher erläutert. Es zeigen

Fig. 1 eine denkbare Darstellung von gleichmässig grauen Flächen durch senkrechte Striche,
Fig. 2 eine Darstellung von gleichmässig grauen Flächen durch verteilte Punkte,
Fig. 3 Diagramme von verschiedenen Signalen,
Fig. 4 ein Schaltbild einer Addierstufe,
Fig. 5 ein Blockschaltbild eines Faksimile-Geräts.

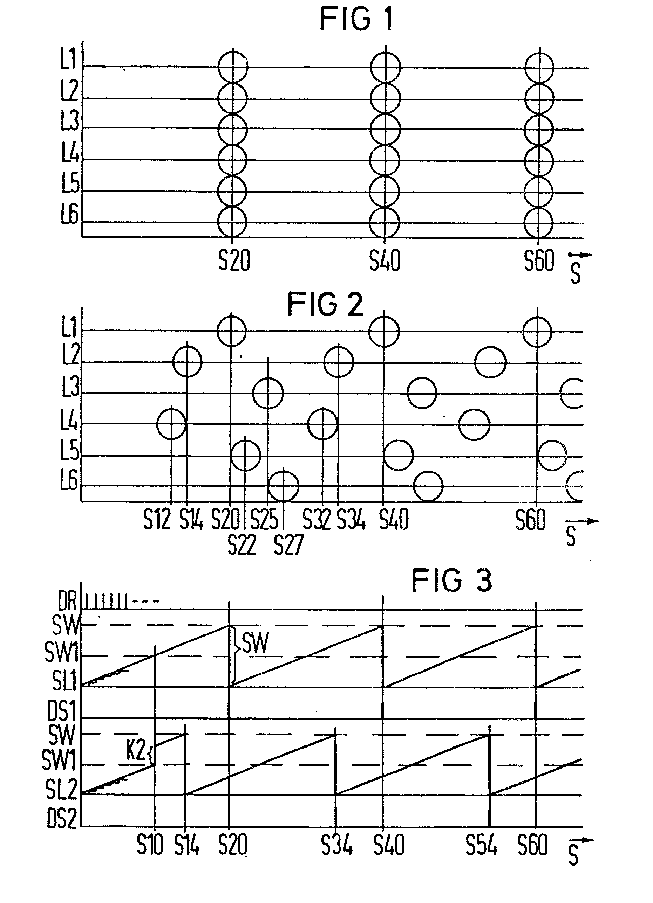

Bei der Darstellung in Fig. 1 wird angenommen, dass die Darstellung der Grauwerte gleichzeitig in sechs Linien L1 bis L6 erfolgt. Die entsprechenden Grauwertsignale werden beispielsweise mit Hilfe eines Abtasters erzeugt, der eine Vorlage gleichzeitig auf entsprechenden sechs Linien abtastet. Die Grauwertsignale werden einer Addierstufe zugeführt, die die Momentanwerte der Grauwertsignale jeder Linie summiert. Wenn die jeder Linie zugeordnete Summe einen vorgegebenen Schwellenwert erreicht oder überschreitet, wird an einen Punkte gleicher Grösse erzeugenden Mosaikdruckkopf ein Druckbefehl abgegeben.

Wenn eine gleichmässig graue Fläche abgetastet wird und für jede Linie L1 bis L6 bei der Summation der gleiche Anfangswert vorhanden ist, erreicht die Summe bei allen Linien L1 bis L6 zur gleichen Zeit den Schwellenwert, so dass, wie in Fig. 1 an der Stelle s20 dargestellt ist, in allen Linien L1 bis L6 gleichzeitig ein Punkt gedruckt wird. Nach dem Drucken eines Punkts wird die entsprechende Summe entweder gelöscht oder um einen konstanten Wert vermindert, der einem Schwarzwert entspricht. An den Stellen s40 und s60 erreichen die Summen wieder den Schwellenwert. Bei der Wiedergabe wird damit die empfangsseitig abgetastete gleichmässig graue Fläche durch aus den Punkten gebildete senkrechte Striche dargestellt. Diese Darstellung hat den Nachteil, dass sie einerseits für den Betrachter störend wirkt und zur Ausbildung von Moirémustern führt und dass andererseits bei der Wiedergabe nicht unterschieden werden kann, ob auf der Vorlage eine gleichmässig graue Fläche vorhanden war oder dort entsprechende senkrechte Striche dargestellt waren.

Bei der Darstellung in Fig. 2 wird ebenfalls angenommen, dass eine gleichmässig graue Fläche in sechs Linien gleichzeitig abgetastet wird und durch einen Druckkopf dargestellt wird, der den sechs Linien L1 bis L6 zugeordnete Druckelemente enthält. Zur Vermeidung der Ausbildung von senkrechten Strichen bei der Darstellung von gleichmässig grauen Flächen werden zu den den einzelnen Linien L1 bis L6 zugeordneten Summen unterschiedliche konstante Werte hinzuaddiert. Die Summe der Linie L1 bleibt unverändert, so dass die Punkte auf dieser Linie an den Stellen s20, s40 und s60 gedruckt werden, die den Stellen s20, s40 und s60 in Fig. 1 entsprechen. Der dieser Linie L1 zugeordnete konstante Wert beträgt somit Null. Der der Linie L2 zugeordneten Summe wird der Wert $\frac{1}{3}$ hinzuaddiert, so dass diese Summe bereits an der Stelle s14 den Schwellenwert erreicht und ein Druckbefehl an das entsprechende Druckelement abgegeben wird. Anschliessend wird die Summe in gleicher Weise wie bei der Darstellung der Punkte auf der Linie L1 um den dem Schwarzwert zugeordneten Wert vermindert. An der Stelle s32 wird der Schwellenwert S erneut erreicht und ein weiterer Punkt auf der Linie L2 gedruckt. In entsprechender Weise wird von der der Linie L3 zugeordneten Summe der Wert $\frac{1}{4}$ subtrahiert, so dass zum Zeitpunkt s25 der Schwellenwert S erreicht wird und ein Druckbefehl an den Druckkopf abgegeben wird. Den den Linien L4 bis L6 zugeordneten Summen werden die konstanten Werte $\frac{5}{12}$, $-\frac{1}{2}$ bzw. $-\frac{1}{3}$ hinzuaddiert.

Die hinzuaddierten Werte werden so gewählt, dass ihre Summe möglichst klein bzw. möglichst 0 wird, um eine Veränderung des Grauwerts zu vermeiden. Im vorliegenden Beispiel ergibt sich eine Gesamtsumme von $\frac{1}{12}$. Die einzelnen konstanten Werte werden so gewählt, dass eine möglichst gleichmässige Verteilung der Punkte erreicht wird, um die Ausbildung von senkrechten, schrägen oder waagrechten Linien zu vermeiden. Bei der im folgenden dargestellten Tabelle sind Beispiele für die konstanten Werte angegeben, die dem j-ten Druckelement einer Anzahl von k gleichzeitig betätigbaren Druckelementen hinzuzuaddieren sind.

| j \ k | 2 | 3 | 4 | 5 | 6 | 7 | 8 |
|---|---|---|---|---|---|---|---|
| 1 | 0 | 0 | $\frac{1}{8}$ | 0 | 0 | 0 | 0 |
| 2 | $\frac{1}{4}$ | $\frac{1}{3}$ | $-\frac{1}{8}$ | $\frac{2}{5}$ | $\frac{1}{3}$ | $\frac{5}{14}$ | $\frac{3}{8}$ |
| 3 | – | $-\frac{1}{6}$ | $\frac{3}{8}$ | $-\frac{2}{5}$ | $-\frac{1}{4}$ | $-\frac{1}{7}$ | $-\frac{1}{8}$ |
| 4 | | – | $-\frac{1}{4}$ | $\frac{3}{10}$ | $\frac{5}{12}$ | $\frac{1}{7}$ | $\frac{1}{8}$ |
| 5 | | | – | $-\frac{1}{5}$ | $-\frac{1}{12}$ | $-\frac{5}{14}$ | $-\frac{3}{8}$ |
| 6 | | | | – | $-\frac{1}{3}$ | $-\frac{3}{14}$ | $\frac{1}{4}$ |
| 7 | | | | | – | $\frac{2}{7}$ | $-\frac{7}{16}$ |
| 8 | | | | | | – | $\frac{3}{16}$ |

Wie zu ersehen ist, ist die Summe der konstanten Werte bei k = 8 Druckelementen = 0, während sie in allen anderen Fällen gleich $\frac{1}{2k}$ ist.

Bei den in Fig. 3 dargestellten Diagrammen ist in horizontaler Richtung die Strecke s dargestellt, die die Druckelemente längs der Linien zurücklegen. In vertikaler Richtung sind die Momentanwerte von Signalen dargestellt, die bei der Wiedergabe einer gleichmässig grauen Fläche auftreten. Die Signale DR sind den einzelnen Druckpositionen zugeordnet. Der Abstand zwischen zwei Signalen DR entspricht einem Teilschritt und wenn die Darstellung in Viertelschritten erfolgt, bilden jeweils vier Signale DR einen Schritt. Die aufsummierten Summen der Grauwertsignale in den einzelnen Linien sind aus Gründen der Verständlichkeit analog dargestellt. Die Summe SL1 gibt die Summe der Grauwertsignale der Linie L1 an. Mit jedem Signal DR wird bei der Abtastung der Vorlage ein Grauwertsignal erzeugt, das einer Addierstufe zugeführt wird. Die einzelnen Momentanwerte der Grauwertsignale werden addiert und an der Stelle s20 erreicht die Summe einen Schwellenwert SW, der einem Schwarzwert zugeordnet ist. Es wird daher ein Drucksignal DS1 erzeugt, das den Abdruck eines Punktes in der Linie L1 an der Stelle s20 bewirkt. Anschliessend wird die Summe um einen Betrag vermindert, der dem Schwellenwert SW entspricht. An den Stellen s40 und s60 werden diese Schwellenwerte erneut ereicht, so dass dort wieder Drucksignale DS1 erzeugt werden, die den Abdruck von Punkten bewirken.

Die der Linie L2 zugeordnete Summe SL2 überschreitet an der Stelle s10 einen Schwellenwert SW1, der dem halben Schwellenwert SW entspricht. An der gleichen Stelle überschreitet auch die Summe SL1 den Schwellenwert SW1 und es wird angenommen, dass auch die den Linien L3 bis L6 zugeordneten Summen an dieser Stelle den Schwellenwert SW1 überschreiten und damit eine gleichmässig graue Fläche kennzeichnen. Der Summe SL2 wird an dieser Stelle der konstante Wert K2 = ⅓ hinzuaddiert, um eine gegenseitige Verschiebung der Punkte längs der Linien zu erreichen. An der Stelle s14 erreicht die Summe SL2 den Schwellenwert SW und es wird ein Drucksignal DS2 erzeugt, das den Abdruck eines Punktes auf der Linie L2 an der Stelle s14 bewirkt. Anschliessend wird die Summe wieder um den Schwarzwert SW vermindert. An der Stelle s24 überschreitet die Summe SL2 wieder den Schwellenwert SW1. Da jedoch die Summe SL1 von der Summe SL2 an dieser Stelle verschieden ist, wird kein konstanter Wert K2 addiert, so dass die Summe SL2 erst an der Stelle S34 den Schwellenwert SW erreicht. An der Stelle S34 wird daher auf der Linie L2 wieder ein Punkt gedruckt. In entsprechender Weise wird auch an der Stelle S54 erneut ein Punkt gedruckt. Ganz entsprechend werden zu den den Linien L3 bis L6 zugeordneten Summen SL3 bis SL6 die entsprechenden positiven oder negativen konstanten Werte K3 bis K6 hinzuaddiert, die der Tabelle zu entnehmen sind.

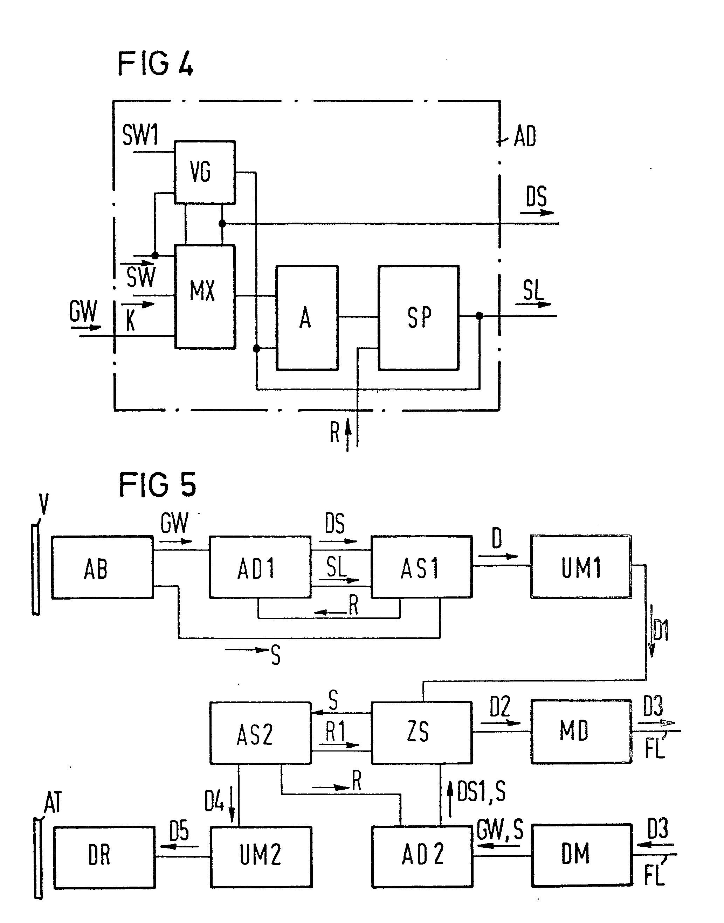

Ein Ausführungsbeispiel einer Addierstufe AD, die eine Addition der Momentanwerte der Grauwertsignale durchführt, ist in Fig. 4 dargestellt. Die von einem Abtaster erzeugten Grauwertsignale GW werden über einen Multiplexer MX einem Addierer A zugeführt. Dem Addierer A ist ein Speicher SP nachgeschaltet, der die jeweilige Summe SL der Grauwerte einer Linie enthält. Die Addierstufe AD enthält einen Vergleicher VG, der die Summe SL mit den Schwellenwerten SW1 und SW vergleicht. Wenn die Summe SL den Schwellenwert SW1 überschreitet, gibt der Vergleicher VG ein Signal A1 an den Multiplexer MX ab, worauf dieser den konstanten Wert K zum Addierer A durchschaltet, sofern die Vergleicher VG der anderen Linien zur gleichen Zeit Signale A1 abgeben. Wenn die Summe SL den Schwellenwert SW überschreitet, gibt der Vergleicher VG das Drucksignal DS ab, das einerseits einer Auswertestufe und andererseits dem Multiplexer MX zugeführt wird, worauf dieser den Schwellenwert SW als Komplement zum Addierer A durchschaltet, um den Schwellenwert SW von der Summe SL zu subtrahieren.

Wenn die Abtasteinrichtung einen Schwarzwert erkennt, wird der Speicher über das Signal R gelöscht, um zu verhindern, dass durch Aufsummieren der Randgrauwerte von scharfen Konturen streuende Punkte erzeugt werden.

Der in Fig. 5 dargestellte Abtaster AB tastet eine Vorlage V auf mehreren parallelen Linien gleichzeitig ab. Die Anzahl der gleichzeitig abgetasteten Linien ist beispielsweise gleich der Anzahl der an einer entsprechenden Druckeinrichtung DR vorgesehenen Druckelemente, mit denen Punkte auf einen Aufzeichnungsträger AT gedruckt werden. Der Abtaster AB gibt die Grauwertsignale jedes Abtastelementes an eine Addierstufe AD1, die entsprechend der in Fig. 4 dargestellten Ausführungsform aufgebaut sein kann. Für jedes Abtastelement kann ein eigener Addierer A und zugehöriger Speicher SP vorgesehen sein, die beispielsweise Bestandteile eines Mikroprozessors sind. Es ist auch denkbar, nur einen einzigen Addierer A vorzusehen, der die Grauwerte GW aller Abtastelemente entsprechend einem Zeitmultiplexverfahren addiert. Die Grauwertsignale GW sind zweckmässigerweise digitale Signale. In diesem Fall ist im Abtaster AB ein Analog-Digital-Wandler vorgesehen. Die Addierstufe AD1 addiert die Grauwertsignale GW für jede Linie gesondert. Beim Überschreiten des Schwellenwerts SW gibt die Addierstufe AD1 ein Drucksignal DS an die Auswertestufe AS1 ab und vermindert den Speicherinhalt um den Schwellenwert SW. Eine der Addierstufe AD1 nachgeschaltete Auswertestufe AS1 prüft, ob die den einzelnen Linien zugeordneten Summen gleichmässig anwachsen. Wenn dies der Fall ist, werden die konstanten Werte K an die Addierstufe AD1 abgegeben und zu den jeweiligen Summen SL hinzuaddiert, wenn die Summen den halben Schwellenwert SW, den Schwellenwert SW1 überschreiten. Wenn ein Abtastelement einen Schwarzwert unmittelbar erkennt, gibt der Abtaster ein Schwarzsignal S an die Auswertestufe AS1 und diese löst zum geeigneten Zeitpunkt einen Druckbefehl aus. Gleichzeitig setzt sie mit dem Signal R den Speicher SP in der Addierstufe AD1 zurück.

Die Auswertestufe AS1 gibt den Signalen S oder DS zugeordnete Drucksignale D an einen Umsetzer UM1 ab, der sie entsprechend den Signalen DR in Fig. 3 in entsprechende Schrittsignale umsetzt. Ein derartiger Umsetzer ist allgemein bekannt und beispielsweise in der DE-OS 27 48 289 beschrieben. Der Umsetzer UM1 erzeugt entsprechende Drucksignale D1 und gibt sie an einen Zwischenspeicher ZS ab. In dem Zwischenspeicher ZS werden die Drucksignale aller gleichzeitig abgetasteten Linien parallel gespeichert. Anschliessend werden sie seriell ausgelesen und als Drucksignale D2 einem Modulator MD zugeführt. Der Modulator MD setzt die Drucksignale D2 in modulierte Drucksignale D3 um und gibt sie an eine Fernleitung FL ab. Die Drucksignale D3 sind derart ausgebildet, dass sie von nach den CCITT-Empfehlungen der Gruppe 2 arbeitenden Geräten empfangen werden können.

Empfangsseitig gelangen die Signale D3 über die Fernleitung FL zu einem Demodulator DM, der Grauwertsignale GW und Schwarzwertsignale S an eine der Addierstufe AD1 entsprechende Addierstufe AD2 abgibt. Die Schwarzwerte S und die durch Summation entstandenen Drucksignale DS1 werden seriell in den Zwischenspeicher ZS eingespeichert. Anschliessend werden sie an eine Auswertestufe AS2 abgegeben, die der Auswertestufe AS1 entspricht. Beim Auftreten von Schwarzwerten S wird der Speicher in der Addierstufe AD2 gelöscht. Die durch Grauwertaddition zustande gekommenen Schwarzwerte S werden im Zwischenspeicher ZS als solche markiert, damit sie von der Auswertestufe AS2 als streuende Punkte erkannt und im Zwischenspeicher gelöscht werden, wenn für das nächste Druckelement in der gleichen oder einer benachbarten Position echte Schwarzwerte S empfangen werden. Diese Markierung erfordert keine zusätzlichen Speicherplätze, weil die Markierung auf den für das nächste Druckelement vorgesehenen Plätzen der gleichen Positionen erfolgen kann. Die Markierung im Zwischenspeicher ZS ermöglicht ausserdem der Auswertestufe AS2, gleichmässige Grauwerte zu erkennen und die im Zwischenspeicher ZS befindlichen Schwarzwerte S so zu verschieben, dass keine senkrechten Striche entstehen. Weiterhin wird zur Vermeidung von streuenden Punkten die Addierstufe AD2 von der Auswertestufe AS2 gelöscht, wenn für ein Druckelement echte Schwarzwerte S im Zwischenspeicher ZS in der gleichen oder benachbarten Position wie die gerade empfangenen Grauwerte gespeichert sind. Die Auswertestufe AS2 überprüft weiterhin, ob die Schwarzwerte S als codierte Druckbefehle zulässig sind. Beispielsweise wird geprüft, ob bei einer Darstellung in einem Viertelschrittraster der Abstand von zwei Punkten dem Abstand von vier Signalen DR in Fig. 3 entspricht. Die Drucksignale werden als Signale D4 an einen Umsetzer UM2 abgegeben, der die Drucksignale D4 decodiert und entsprechend der Drucksignale D5 an den Druckkopf DR abgibt.

Die Addierstufe AD2 ist nur dann erforderlich, wenn die übertragenen Signale D3 Grauwertsignale darstellen. Falls auf der Sendeseite, entsprechend Fig. 5 bereits die Grauwerte in Pseudo-Halbtöne umgesetzt werden und nur noch Schwarzwerte übertragen werden, können diese unmittelbar dem Zwischenspeicher ZS als Signale S zugeführt werden.

**Patentansprüche**

1. Verfahren zum Darstellen von Grauwerten bei einer Faksimile-Übertragung, bei dem eine mit grafischen Mustern versehene Vorlage (V) auf mehreren parallelen Linien (L) abgetastet wird, bei dem den Grauwerten der grafischen Muster zugeordnete Grauwertsignale (GW) erzeugt werden und bei dem die Grauwerte durch einzelne Punkte konstanter Grösse dargestellt werden, deren Anzahl pro Flächeneinheit dem jeweiligen Grauwert zugeordnet ist, gekennzeichnet durch die zeitliche Aufeinanderfolge folgender Verfahrensschritte:

a) in bekannter Weise werden die Momentanwerte der Grauwertsignale (GW) einer vorgegebenen Anzahl von Linien (L) addiert und gespeichert,
b) falls die den Linien (L) zugeordneten gespeicherten Summen (SL) gleich sind, werden zu den jeweiligen Summen (SL) unterschiedliche konstante Werte (K) hinzuaddiert,
c) wenn eine Summe (SL) einen vorgegebenen Schwellenwert (SW) erreicht, wird in der entsprechenden Linie (L) ein Punkt dargestellt,
d) nach dem Drucken eines Punkts wird die Summe (SL) um einen einem Schwarzwert entsprechenden Wert (S) vermindert.

2. Verfahren nach Anspruch 1, dadurch gekennzeichnet, dass die Grauwertsignale (GW) die Grauwerte digitalisiert darstellen und dass die Addition der Grauwertsignale (GW), der konstanten Werte (K) und die Subtraktion des einem Schwarzwert entsprechenden Werts (S) digital erfolgen.

3. Verfahren nach Anspruch 1 oder Anspruch 2, dadurch gekennzeichnet, dass der jeweilige konstante Wert (K) addiert wird, wenn die entsprechende Summe (SL) den halben Schwellenwert (SW1) erreicht.

4. Verfahren nach einem der Ansprüche 1 bis 3, dadurch gekennzeichnet, dass die Summe der zu den einzelnen Summen (SL) addierten Werte (K) bei einer vorgegebenen Anzahl von Linien (L) möglichst klein ist.

5. Verfahren nach einem der Ansprüche 1 bis 3, dadurch gekennzeichnet, dass die Summe der zu den einzelnen Summen (SL) addierten Werte (K) bei einer vorgegebenen Anzahl von Linien (L) gleich Null ist.

6. Verfahren nach einem der Ansprüche 1 bis 5, dadurch gekennzeichnet, dass der Schwellenwert (SW) gleich ist dem dem Schwarzwert zugeordneten Wert (S).

7. Verfahren nach einem der Ansprüche 1 bis 6, dadurch gekennzeichnet, dass der Schwellenwert (SW) gleich ist einem vorgegebenen ganzzahligen Vielfachen des Schwarzwerts für einen Teilschritt ist, wobei unter einem Teilschritt die kleinste Differenz zwischen zwei möglichen Punktlagen längs einer Linie (L) verstanden wird.

8. Verfahren nach einem der Ansprüche 1 bis 7, dadurch gekennzeichnet, dass die Summen (SL) beim Auftreten eines einem Schwarzwert zugeordneten Werts (S) den Wert Null annehmen.

9. Anordnung zur Durchführung des Verfahrens nach Anspruch 1, dadurch gekennzeichnet, dass eine mit einer Auswertestufe (AS1) verbundene Addierstufe (AD1) vorgesehen ist, die die Grauwertsignale (GW) summiert, die konstanten Werte (K) addiert, wenn die Auswertestufe (AS1) die Gleichheit der den Linien (L) zugeordneten Summen (SL) erkennt und die den dem Schwarzwert zugeordneten Wert (S) subtrahiert, wenn die jeweilige Summe (SL) den Schwellenwert (SW) erreicht.

10. Schaltungsanordnung nach Anspruch 9, dadurch gekennzeichnet, dass die Addierstufe (AD) einem ein grafisches Muster abtastenden Abtaster (AB) und/oder einem empfangene Signale demodulierenden Demodulator (DM) nachgeschaltet ist.

## Claims

1. Method for the representation of grey values in facsimile transmission, wherein an original (V) provided with graphic patterns is scanned over a plurality of parallel lines (L), wherein grey value signals (GW) are produced which are assigned to the grey values of the graphic patterns, and wherein the grey values are represented by individual points of constant size, the number of which per unit area is assigned to the grey value in question, characterised by the sequence of the following method steps:

a) in known manner, the instantaneous values of the grey value signals (GW) of a predetermined number of lines (L) are added and stored,
b) if the stored sums (SL) assigned to the lines (L) are equal, different constant values (K) are added to the sums in question (SL),
c) if a sum (SL) reaches a predetermined threshold value (SW), a point is plotted in the corresponding line (L),
d) following the printing of a point, the sum (SL) is reduced by a value (S) corresponding to a black value.

2. Method as claimed in claim 1, characterised in that the grey value signals (GW) represent the grey values in digitalised form, and that the addition of the grey value signals (GW), the constant values (K), and the subtraction of the value (S) which corresponds to a black value are carried out in digital fashion.

3. Method as claimed in claim 1 or 2, characterised in that the constant value (K) in question is added when the corresponding sum (SL) reaches half the threshold value (SW1).

4. Method as claimed in one of the claims 1 to 3, characterised in that the sum of the values (K) added to the individual sums (SL) in the case of a predetermined number of lines (L) is as small as possible.

5. Method as claimed in one of the claims 1 to 3, characterised in that the sum of the values (K) added to the individual sums (SL) in the case of a predetermined number of lines (L) is equal to zero.

6. Method as claimed in one of the claims 1 to 5, characterised in that the threshold value (SW) is equal to the value (S) assigned to the black value.

7. Method as claimed in one of the claims 1 to 6, characterised in that the threshold value (SW) is equal to a predetermined, whole-numbered multiple of the black value for a subsidiary step, where a subsidiary step is to be understood as the smallest difference between two possible point positions along a line (L).

8. Method as claimed in one of the claims 1 to 7, characterised in that on the occurrence of a value (S) assigned to a black value, the sums (SL) assume the value zero.

9. Arrangement for the implementation of the method claimed in claim 1, characterised in that an adder stage (AD1) is provided which is connected to an analysis stage (AS1) and which sums the grey value signals (GW) and adds the constant values (K) when the analysis stage (AS1) recognises that the sums (SL) assigned to the lines (L) are equal, and which substracts the value (S) assigned to the black value when the sum (SL) in question reaches the threshold value (SW).

10. Circuit arrangement as claimed in claim 9, characterised in that the adder stage (AD) is connected at the output end of a scanner (AB) which scans a graphic pattern, and/or of a demodulator (DM) which demodulates received signals.

## Revendications

1. Procédé pour représenter des valeurs de gris dans le cas d'une transmission de fac-similés, selon lequel le modèle (V) muni de dessins graphiques est exploré suivant plusieurs lignes parallèles (L) et selon lequel les signaux de valeurs de gris (GW) associés aux valeurs de gris des dessins graphiques sont produits et selon lequel des valeurs de gris sont représentées par différents points de taille constante, dont le nombre par unité de surface est associé à la valeur de gris respective, caractérisé par la succession temporelle des phases opératoires suivantes:

a) de façon connue, les valeurs instantées des signaux de valeurs de gris (GW) d'un nombre prédéterminé de lignes (L) sont additionnées et mémorisées,
b) dans le cas où les sommes (SL) mémorisées associées aux lignes (L) sont identiques, des valeurs constantes différentes (K) sont ajoutées aux sommes respectives (SL),

c) lorsqu'une somme (SL) atteint une valeur de seuil prédéterminée (SW), un point est représenté sur la ligne correspondante (L),

d) après l'impression d'un point, la somme (SL) est diminuée d'une valeur (S) correspondant à une valeur de noir.

2. Procédé suivant la revendication 1, caractérisé par le fait que les signaux de valeurs de gris (GW) représentent les valeurs de gris sous forme numérique et que l'addition des signaux de valeurs de gris (GW), des valeurs constantes (K) et la soustraction de la valeur (S) correspondant à une valeur de noir s'effectuent sous forme numérique.

3. Procédé suivant la revendication 1 ou la revendication 2, caractérisé par le fait que la valeur constante respective (K) est ajoutée lorsque la somme correspondante (SL) atteint la demi-valeur de seuil (SW1).

4. Procédé suivant l'une des revendications 1 à 3, caractérisé par le fait que la somme des valeurs (K) ajoutées aux différentes somes (SL) pour un nombre prédéterminé de lignes (L) est aussi faible que possible.

5. Procédé suivant l'une des revendications 1 à 3, caractérisé par le fait que la somme des valeurs (K) ajoutées aux différentes sommes (SL) pour un nombre prédéterminé de lignes (L) est égale à zéro.

6. Procédé suivant l'une des revendications 1 à 5, caractérisé par le fait que la valeur de seuil (SW) est égale à la valeur (S) associée à la valeur de noir.

7. Procédé suivant l'une des revendications 1 à 6, caractérisé par le fait que la valeur de seuil (SW) est égale à un multiple entier prédéterminé de la valeur de noir pour un pas partiel, le terme de pas partiel désignant la plus petite différence entre deux positions de points possibles le long d'une ligne (L).

8. Procédé suivant l'une des revendications 1 à 7, caractérisé par le fait que les sommes (SL1) prennent la valeur zéro lors de l'apparition d'une valeur (S) associée à une valeur de noir.

9. Dispositif pour la mise en œuvre du procédé selon la revendication 1, caractérisé par le fait qu'il est prévu un étage additionneur (AD1) relié à un étage d'évaluation (AS1) et qui fait la somme des signaux de valeurs de gris (GW), additionne les valeurs constantes (K) lorsque l'étage d'évaluation (AS1) identifie l'identité des sommes (SL) associées aux lignes (L), et qui soustrait la valeur (S) associée à la valeur de noir, lorsque la somme respective (SL) atteint la valeur de seuil (SW).

10. Montage suivant la revendication 9, caractérisé par le fait que l'étage additionneur (AD) est branché en aval d'un dispositif d'exploration (AB) explorant un modèle graphique et/ou en aval d'un démodulateur (DS) démodulant des signaux reçus.

0 045 965

FIG 1

FIG 2

FIG 3

9

0 045 965

## FIG 4

## FIG 5

11